# EUROPEAN PATENT APPLICATION

(11) **EP 4 406 682 A1**
(43) Date of publication of application: **31.07.2024**
(21) Application number: 22872513.1
(22) Date of filing: 30.06.2022
(51) Int. Cl.: B23D 61/02, B23D 47/00, B26D 1/14, B27B 33/08

(54) **DISK-SHAPED ROTATING TOOL**

(30) Priority: 23.09.2021 JP 2021154967
(71) Applicant: Kanefusa Kabushiki Kaisha, Ohguchi-cho, Niwa-gun Aichi 480-0192 (JP)
(72) Inventor: ASAKA, Keiichi, Niwa-gun, Aichi 480-0192 (JP); MIYAJIMA, Kazumasa, Niwa-gun, Aichi 480-0192 (JP)
(74) Representative: Kuhnen & Wacker Patent- und Rechtsanwaltsbüro PartG mbB
(86) International application number: PCT/JP2022/026349
(87) International publication number: WO 2023/047756

(57) **Abstract**

Provided is a disk-shaped rotating tool in which cutting vibration and cutting noise are less likely to occur than conventional technology. This disk-shaped rotating tool has: a base metal 10 in which one or more slits 15 penetrating the front and rear surfaces are formed; and a large number of teeth 20 provided on the outer circumference of the base metal 10 so as to protrude radially outward, wherein the slit 15 is folded back one or more times and defines a finger piece having a thick tip shape, and the length of the finger piece is at least three times the average value of the width of the root and the width of the widest portion. By defining the finger piece by the slit 15 and making the shape of the finger piece a thick tip shape, it is possible to effectively suppress the occurrence of cutting vibration and cutting noise. It is preferable that at least one among the slits 15 be repeatedly folded back four or more times to define four or more finger pieces. In this case, the finger pieces are defined such that the orientations thereof are alternately switched. It is also preferable that the angle formed by both lateral lines of the finger piece is 1° or greater.

## Description

### Technical Field

The present invention relates to a disk-shaped rotating tool such as a circular saw for use in machining all kinds of materials including wood, woody material, plastic, iron/steel material, and non-ferrous metal, and in particular, to a disk-shaped rotating tool that is unlikely to generate cutting vibration and cutting noise.

### Background Art

In cutting with the use of a disk-shaped rotating tool such as a circular saw, cutting vibration occurs depending on the conditions, and impairment of the cutting surface and generation of cutting noise are sometimes problematic. For this reason, various techniques for reducing vibration in disk-shaped rotating tools have been considered heretofore, and random pitches, internal slits (slits) and the like have been proposed. Among these, various patents and designs regarding slits exist, and the types of slits are broadly divided into wave-shaped slits and curved slits (Patent Literatures 1 to 5).

### Citation List

### [Patent Literature]

Patent Literature 1: JP4144863 (B)
Patent Literature 2: JP4136893 (B)
Patent Literature 3: JP4236240 (B)
Patent Literature 4: JP2001-38525 (A)
Patent Literature 5: JP2000-153405 (A)

### Summary of Invention

### Technical Problem

However, generation of cutting vibration and cutting noise is not sufficiently controlled, and further control of cutting vibration and cutting noise is required.

The present invention has been accomplished in light of the above circumstances, and a problem addressed by the present invention is to provide a disk-shaped rotating tool that generates less cutting vibration and cutting noise than conventional disk-shaped rotating tools provided with slits.

### Solution to Problem

As a result of diligent study for the purpose of solving the above problem, the inventors found a suitable form for a slit, and accomplished the present invention. That is, a disk-shaped rotating tool that solves the aforementioned problem is a disk-shaped rotating tool including: a disk-shaped base metal having at least one slit formed so as to penetrate a front surface and a back surface; and a large number of teeth disposed on the periphery of the base metal so as to protrude outwardly in a radial direction. The slit is folded back at least once to define a finger piece. The finger piece has a club shape in which a width of a widest part near a tip of the finger piece is larger than a width of a root of the finger piece, and the finger piece has a length of three times or more an average value of the width of the root and the width of the widest part.

By defining a finger piece by a slit, and forming the finger piece into a club-shape, generation of cutting vibration and cutting noise is effectively inhibited.

Preferably, at least one of the slits is repeatedly folded back four or more times to define four or more finger pieces. In this case, the finger pieces are defined such that the orientations are switched alternately.

Furthermore, the angle formed by both side lines of the finger piece is preferably 1° or more. Here, "both side lines of the finger piece" are straight lines respectively connecting both sides of the root of the finger piece and both sides of the widest part of the finger piece.

### Advantageous Effects of Invention

In the disk-shaped rotating tool of the present invention, generation of cutting vibration and cutting noise is inhibited by having the configuration described above.

### Brief Description of Drawings

Fig. 1 is a front view of a disk-shaped rotating tool of the present embodiment;
Fig. 2 is an enlarged view of an internal slit provided in the disk-shaped rotating tool of the present embodiment;
Fig. 3 is a schematic view showing the way of measuring widths and lengths of a finger piece included in the disk-shaped rotating tool of the present embodiment;
Fig. 4 is an enlarged view of finger pieces provided in the disk-shaped rotating tool of another form of the present embodiment;
Fig. 5 is an enlarged view of finger pieces provided in the disk-shaped rotating tool of another form of the present embodiment;
Fig. 6 is an enlarged view of finger pieces provided in the disk-shaped rotating tool of another form of the present embodiment;
Fig. 7 is a graph showing the relationship between the angle formed by both side lines of a finger piece in a present example, and the average modal damping ratio calculated by FEM analysis;
Fig. 8 is a graph showing the relationship between the ratio between a length and a width of a finger piece in the present example, and the average modal damping ratio calculated by FEM analysis;
Fig. 9 is a graph showing the relationship between the number of folding back times (the number of finger pieces) of the slit in the present example, and the average modal damping ratio calculated by FEM analysis;
Fig. 10 is a front view of a disk-shaped rotating tool of a comparative example; and
Fig. 11 is a graph showing noise when a material to be cut is actually cut.

### Description of Embodiments

Hereinafter, the disk-shaped rotating tool of the present invention is described in detail on the basis of an embodiment. The disk-shaped rotating tool of the present embodiment is a tool that performs machining such as cutting, groove machining, or tenon machining on wood, woody material, plastic, iron/steel material, non-ferrous metal, and the like. Any of numerical values in the present description may be adopted as an upper or lower limit when a numerical range is newly defined, and further, the adopted numerical value may or may not be included in the numerical range.

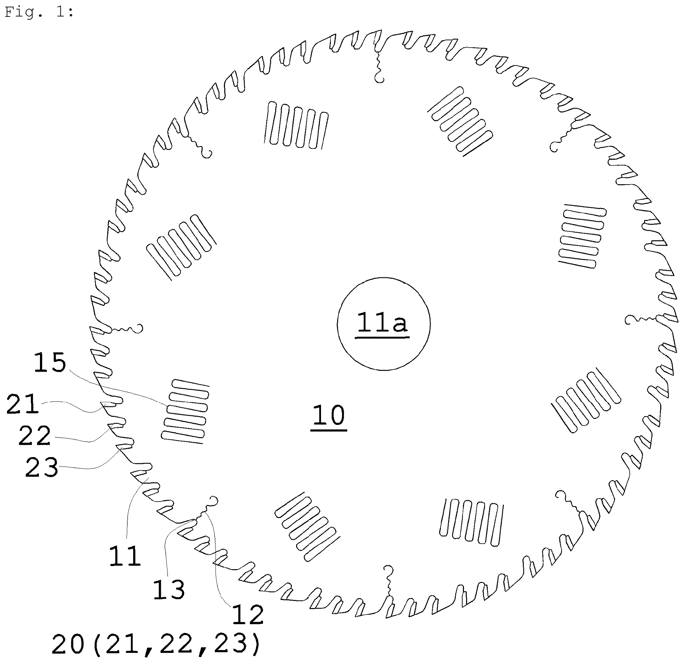

As shown in Fig. 1, the disk-shaped rotating tool of the present embodiment has a disk-shaped base metal 10 and a large number of teeth 20 disposed on the periphery of the base metal 10 so as to protrude outward in the radial direction.

The base metal 10 is disk-shaped, and has a central shaft hole 11a formed in the center. On the periphery of the base metal 10, a large number of tooth bases 11 are formed at positions corresponding to the positions where the teeth 20 are formed. The teeth 20 are fixed to the tooth bases 11. Two teeth 21 and 22 that are disposed at the same pitch, and a tooth 23 disposed at a larger pitch form one set. There are twenty-four sets, i.e., a total of seventy-two teeth 20, over the entire circumference. The number of the teeth 20 is not particularly limited. Also, the pitch may be the same pitch or may vary over the entire circumference. Each tooth 20 is a member having a larger thickness than the base metal 10, and is fixed to the corresponding tooth base 11 of the base metal 10 by welding or the like.

A peripheral slit 12 is provided every nine teeth 20 (every three sets). The peripheral slit 12 extends in a wave-like form from a tooth bottom 13 between the tooth 21 and the tooth 23 toward the center, and is finally rounded into an arc shape. The peripheral slit 12 may or may not be provided, and may be provided in a different arrangement. Furthermore, a plurality of kinds of peripheral slits having different forms may be provided.

The base metal 10 is provided with eight internal slits 15 at equal intervals in the circumferential direction at the same midway position in the radial direction. Here, the number of internal slits is not particularly limited, and the arrangement is not particularly limited. The arrangement need not be evenly spaced, and the position of arrangement in the radial direction is not particularly limited. When a plurality of internal slits are provided, the internal slits may be disposed at the same position in the radial direction, or may be misaligned in the radial direction. Both the peripheral slit 12 and the inner slit 15 penetrate the front and back surfaces, and are filled with a viscoelastic material.

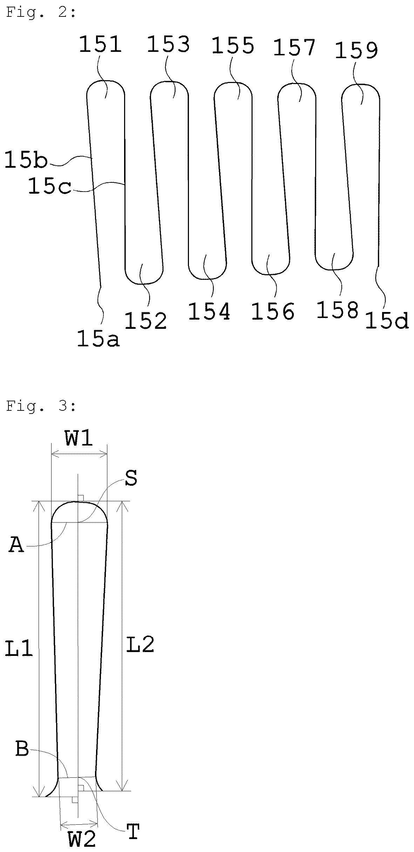

As shown in Fig. 2, the internal slit 15 is in the form of a groove that continues from one end part 15a to the other end part 15d and penetrates the front and the back surfaces, and the slit is folded back nine times to define nine finger pieces 151 to 159 as part of the base metal 10. The finger pieces 151 to 159 all are club-shaped, and tip directions are oriented alternately. For example, the finger piece 151 is defined by both side lines 15b and 15c, and has a width increasing in the tip direction (upward in the drawing).

The number of folding back times of a slit is one or more. The larger the number is, the higher the damping effect is. However, the number is not particularly limited. The lower limit value of the number of folding back times is preferably 4 or more, more preferably 6 or more. Examples of the upper limit value include 13 times and 11 times. By reducing the number of folding back times, deterioration in rigidity of the base metal is inhibited.

Here, the finger piece being club-shaped means that a width of the widest part near the tip is larger than a width of the root. Here, the root of the finger piece means the side, that is fixed to the base metal, of the finger piece defined by the slit, and the tip of the finger piece means the side, that is freely movable, of the finger piece. Next, near the tip of the finger piece means a part up to one-third the length of the finger piece from the tip of the finger piece, in the range from the tip of the finger piece to the root of the finger piece.

A specific description using Fig. 3 follows. Fig. 3 is an enlarged view of a finger piece folded back once, and the slit that defines the finger piece has different lengths on both sides of the finger piece. In Fig. 3, the slit on the right-hand side of the drawing sheet is shorter than the slit on the left-hand side of the drawing sheet. In Fig. 3, the largest width near the tip is a segment A, and the width of the root is a segment B having the smallest width in the root. In this case, the length of the finger piece is the average value of lengths (left side L1, right side L2) when each of the left and right slits is sandwiched by lines perpendicular to the segment connecting a middle point S of the segment A and a middle point T of the segment B. The length of a finger piece may be the same for all finger pieces, but there may be a finger piece having a different length. When one slit is folded back to define a plurality of finger pieces, the neighboring finger pieces may have the same length, or may have different lengths.

In the same finger piece, the value obtained by dividing the length of the finger piece by the average value of the width of the widest part near the tip and the width of the root (width of finger piece), i.e., the ratio between the length and the width of the finger piece, is 3 or more, and in particular, the lower limit value is 4 times, or 6 times. The longer the length of the finger piece relative to the width of the finger piece is (the larger the ratio between the length and the width of the finger piece is), the higher the damping effect is. As the upper limit value, 9 times, which is the ratio at which improvement in damping effect becomes small to some extent, is conceivable.

The both side lines connecting both ends of the segment A and both ends of the segment B extend in the direction in which the tip direction of the finger piece spreads. In particular, the angle is preferably 1° or more, examples of the lower limit value include 4° and 6°, examples of the upper limit value include 20°, 13°, and 11°, and these lower limit values and upper limit values may be combined as desired. When there are a plurality of finger pieces, at least one of the finger pieces has a club shape, but the rate of the finger pieces having a club shape among the plurality of finger pieces is preferably three tenths or more, more preferably five tenths or more, further preferably eight tenths or more, and most preferably all have a club shape.

The orientation from the root of the finger piece to the tip direction is not particularly limited. The orientation may be radially outward direction, radially inward direction, or circumferential direction, and may be another direction irrespective of these directions. When there are a plurality of finger pieces, orientations of the finger pieces may be the same or different from one another. When one slit is folded back multiple times to define a plurality of finger pieces, the orientations of neighboring finger pieces alternate, as shown in Fig. 2.

Here, the slit that defines a finger piece passes both ends having the largest width near the tip, and passes both ends of the width of the root. In particular, the slit preferably coincides, but does not necessarily coincide, with the both side lines. For example, the slit may have a curved shape (wave shape, arc shape, and so on).

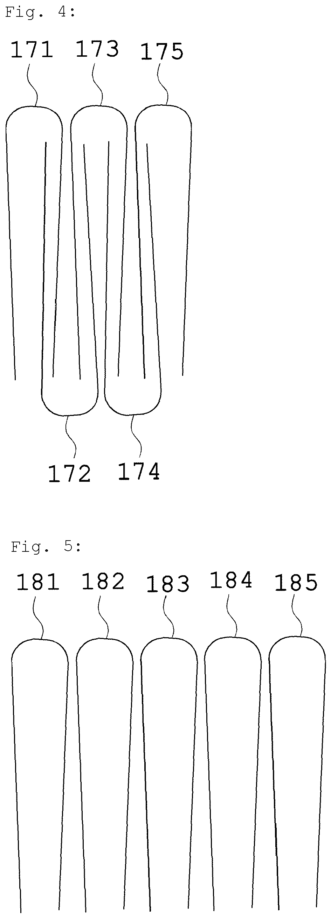

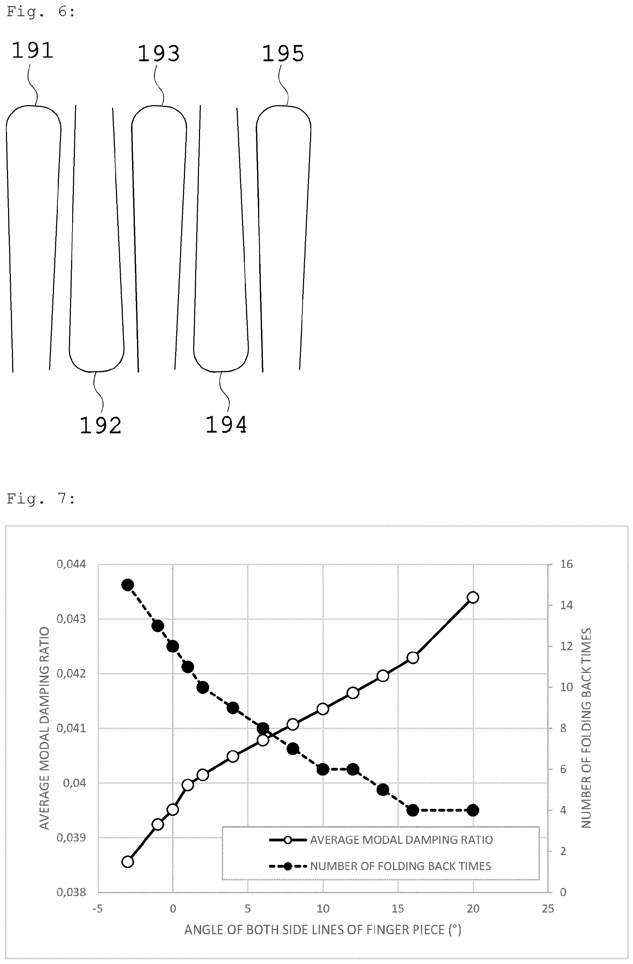

Also, a finger piece defined by another slit may be arranged proximally. Here, "proximal" means that the distance between neighboring slits is smaller than or equal to the length of a finger piece of the shorter one of the neighboring slits. While slits are folded back to define the finger pieces, such a form that a plurality of folded slits gather and end parts of slits enter inside another finger piece may be employed. Specifically, as shown in Fig. 4, finger pieces 171, 173, 175 formed by slits folded back once are arranged side by side in the same orientation, and a finger piece 172 is formed by folding back a slit so as to extend from inside the finger piece 171 to the neighboring finger piece 173. Likewise, a finger piece 174 is formed by folding back a slit from inside the finger piece 173 to inside the finger piece 175. Thus, the five finger pieces 171 to 175 defined by independent slits are arranged proximally. Besides the above, as shown in Figs. 5 and 6, finger pieces may be simply arranged side by side.

### Examples

Hereinafter, the disk-shaped rotating tool of the present invention is described specifically by presenting Examples. The average modal damping ratio was calculated by finite element method analysis (FEM analysis). The higher the average modal damping ratio is, the higher the effect of damping vibration is indicated.

### (Test 1: Number of folding back times of slit, and angle of both side lines of finger piece)

The model used was one finger piece having a finger piece length of 30 mm and a root width of 5 mm. The average modal damping ratio of such a finger piece when the angle of both side lines of the finger piece was varied in the range of -3° to 20° was calculated. For reference, the number of finger pieces formable in the same area (number of folding back times of slit) when the finger piece length is 26 mm, the root width is 3 mm, and the length in which the finger pieces are arranged side by side is within 37 mm, was also calculated. The results are shown in Fig. 7.

As is apparent from Fig. 7, the average modal damping ratio increased as the angle of both side lines of the finger piece increased. However, the number of finger pieces formable in the same area decreased. Test 3 revealed that the number of finger pieces is preferably 4 or more and 11 or less. In the chart, only the preferred range is described. The number of finger pieces is further preferably 6 or more. From the number of finger pieces, the angle of both side lines of a finger piece is preferably 1° to 20°, more preferably 1° to 13°.

### (Test 2: Ratio between length and width of finger piece)

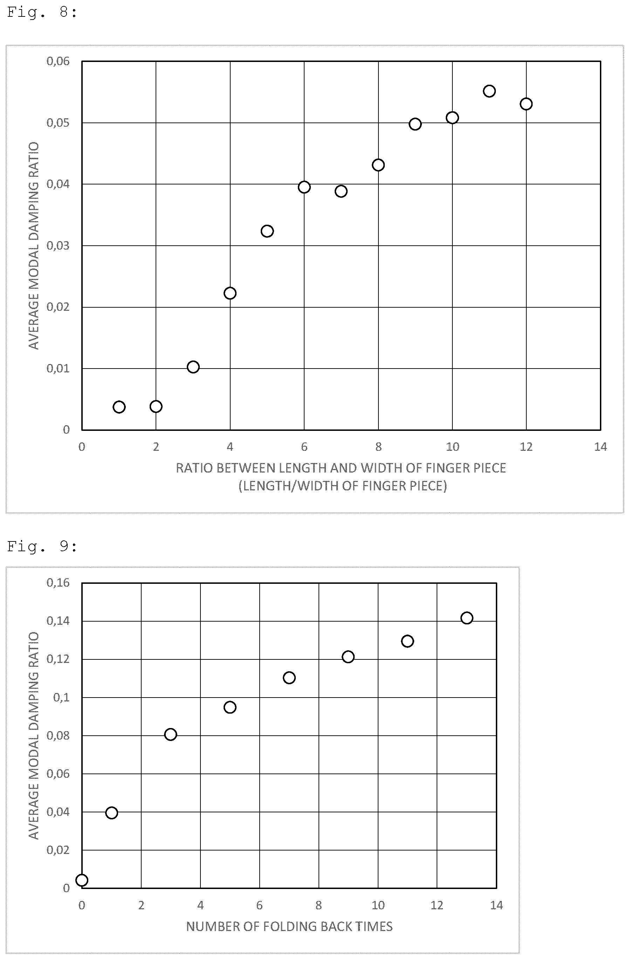

The average modal damping ratio when a width of finger pieces was constant at 5 mm and a length of finger pieces was varied was calculated by FEM analysis. The results are shown in Fig. 8.

As is apparent from Fig. 8, as the ratio between the length and the width of a finger piece (= length of finger piece ÷ width of finger piece) increases, the average modal damping ratio increases. The value of the average modal damping ratio rapidly rose at a ratio, between the length and the width of a finger piece, of up to about 6, and then the value showed gentle rise, and almost no rise was observed at a ratio of 9 or more. Therefore, the ratio between the length and the width of a finger piece is preferably 4 or more, more preferably 6 or more. In order to keep the rigidity of the finger piece at a certain level or higher, the upper limit value is preferably 9 or less.

### (Test 3: Number of folding back times of slit)

The average modal damping ratio when the number of folding back times of slit was varied was calculated by FEM analysis. The same number of finger pieces as the number of folding back times was formed. Here, a width of finger pieces was constant at 5 mm, and the ratio between a length and a width of a finger piece was 6. The results are shown in Fig. 9.

As is apparent from Fig. 9, as the number of folding back times increases, the average modal damping ratio increases. The value of the average modal damping ratio rapidly rose at the number of folding back times of up to about 4, further up to about 6, and then the value showed gentle rise, and almost no rise was observed at 11 or more, further 13 or more. Therefore, the number of folding back times is preferably 4 or more, and more preferably 6 or more. In order to keep the rigidity of the base metal at a certain level or higher, the upper limit value is preferably 13 or less, and more preferably 11 or less.

### (Test 4: Measurement of noise)

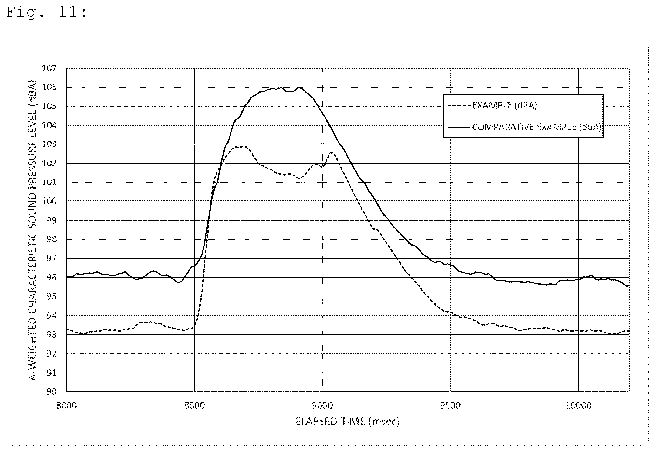

The magnitude of noise generated during cutting (A characteristic) was measured using an actual machine. The disk-shaped rotating tool used for measurement had an outer diameter of 380 mm, and a bakelite plate (20 mm thick) was used as a material to be cut. The number of rotations was 5000 rpm, and the feed speed was 90 mm/min. Cutting was performed, and idling was performed until the elapsed time of 8500 msec, and cutting was performed from 8500 msec to 9000 msec. Then, idling was performed from 9000 msec or later. The noise measurement results are shown in Fig. 11.

As is apparent from Fig. 11, a noise reducing effect of 4 to 5 dBA at maximum was observed in the disk-shaped rotating tool of Example, compared to the disk-shaped rotating tool of Comparative Example.

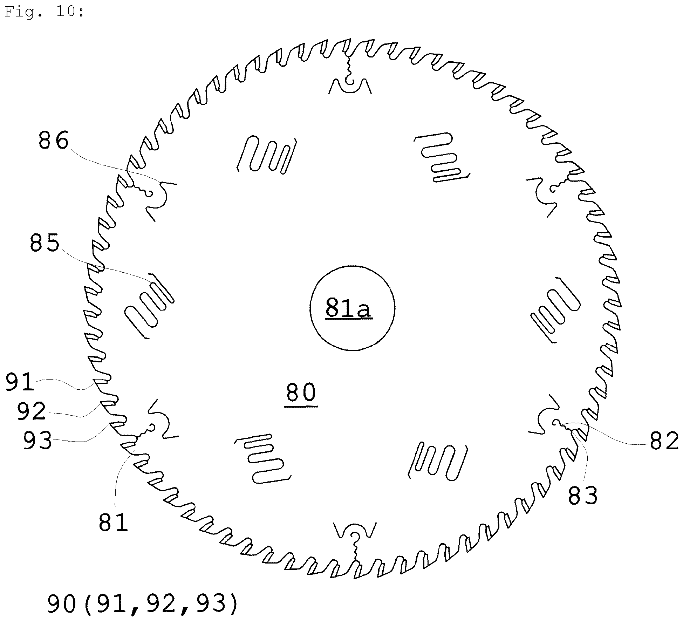

As for the disk-shaped rotating tool used, the disk-shaped rotating tool shown in Fig. 1 was used in Example, and the disk-shaped rotating tool shown in Fig. 10 was used in Comparative Example. The slits (peripheral slit and internal slit) in the disk-shaped rotating tools of Example and Comparative Example are filled with a viscoelastic material. The disk-shaped rotating tool of Comparative Example has a configuration similar to the configuration of the disk-shaped rotating tool shown in Fig. 1 except for internal slits 85 and 86. Specifically, the disk-shaped rotating tool of Comparative Example has a disk-shaped base metal 80 and a large number of teeth 90 disposed on the periphery of the base metal 80 so as to protrude outward in the radial direction.

The base metal 80 is disk-shaped, and has a central shaft hole 81a formed in the center. A large number of tooth bases 81 are formed on the periphery of the base metal 80. The teeth 90 are fixed to the tooth bases 81. Each tooth 90 has the same configuration as the configuration of the tooth 20 of Example.

The base metal 80 is configured to have peripheral slits 82 similar to those of the disk-shaped rotating tool of Example, and the internal slits 85, 86 different from those of Example. The internal slit 85 is identical to that of Example in that the number of folding back times is 6 and the slit forms finger pieces, but is different from Example in that the formed finger pieces are not club-shaped, and both side lines are parallel. The finger pieces defined by the internal slit 85 all have different widths.

### [Description of the reference characters]

10...base metal, 11...tooth base, 12...peripheral slit, 13...tooth bottom, 15...internal slit, 151 to 159...finger piece, 20, 21, 22, 23...tooth

## Claims

1. A disk-shaped rotating tool comprising: a disk-shaped base metal having at least one slit formed so as to penetrate a front surface and a back surface; and a large number of teeth disposed on a periphery of the base metal so as to protrude outwardly in a radial direction, wherein
the slit is folded back at least once to define a finger piece, and
the finger piece has a club shape in which a width of a widest part near a tip of the finger piece is larger than a width of a root of the finger piece, and the finger piece has a length of three times or more an average value of the width of the root and the width of the widest part.

2. The disk-shaped rotating tool according to claim 1, wherein at least one of the slits is repeatedly folded back four or more times to define four or more finger pieces.

3. The disk-shaped rotating tool according to claim 1 or 2, wherein both side lines of the finger piece form an angle of 1° or more.
